# EUROPEAN PATENT SPECIFICATION

(11) **EP 1 680 376 B1**
(45) Date of publication and mention of the grant of the patent: **24.03.2010**
(21) Application number: 04790346.3
(22) Date of filing: 13.10.2004
(51) Int. Cl.: C04B 22/00

(54) **ACCELERATOR FOR HYDRAULIC BINDER**
BESCHLEUNIGER FÜR HYDRAULISCHES BINDEMITTEL
ACCELERATEUR POUR LIANT HYDRAULIQUE

(30) Priority: 14.10.2003 IT MI20031983
(43) Date of publication of application: 19.07.2006
(73) Proprietor: Mapei S.p.A., I-20158 Milano (IT)
(72) Inventor: MALTESE, Cristiano, 20158 Milano (IT); PISTOLESI, Carlo, 20158 Milano (IT); FERRARI, Giorgio, 20158 Milano (IT)
(74) Representative: Minoja, Fabrizio
(86) International application number: PCT/EP2004/011473
(87) International publication number: WO 2005/040059

(56) References cited:
- WO-A-00/03958
- FR-A- 939 758
- PATENT ABSTRACTS OF JAPAN vol. 2002, no. 06, 4 June 2002 (2002-06-04) & JP 2002 047048 A (DENKI KAGAKU KOGYO KK), 12 February 2002 (2002-02-12)
- DATABASE CA [Online] CHEMICAL ABSTRACTS SERVICE, COLUMBUS, OHIO, US; POLLMANN, H. ET AL: "Manganese in high alumina cement (HAC)" XP002353356 retrieved from STN Database accession no. 137:144253 cited in the application & CALCIUM ALUMINATE CEMENTS 2001, PROCEEDINGS OF THE INTERNATIONAL CONFERENCE ON CALCIUM ALUMINATE CEMENTS, EDINBURGH, UNITED KINGDOM, JULY 16-19, 2001 , 139-148. EDITOR(S): MANGABHAI, RAMAN J.; GLASSER, FRED P. PUBLISHER: IOM COMMUNICATIONS LTD., LON, 2001,

## Description

The present invention relates to liquid accelerators able to effectively reduce the setting time of a hydraulic system and favouring, at the same time, a fast early compressive strength development.

### BACKGROUND OF THE INVENTION

The excavation of tunnels requires large amount of cementitious materials (mortars and concrete) which are used to prepare temporary or definitive protective shells. For these purposes, the cement mixture is directly sprayed on the rocky surface, by means of high pressure nozzles, without the necessity of moulds. In order to speed up the tunnelling work and for safety reasons, the cement materials should meet the following requirements: 1) to adhere permanently on the rock walls; 2) to have a low rebound (a phenomenon arising mainly by the high spraying pressure) which causes a large concrete loss; 3) to harden very quickly; 4) to develop high early strengths.

Only if the aforementioned conditions are satisfied, a structural consolidation of the tunnel can be obtained allowing fast excavation rates and safe working conditions. Accelerating admixtures are usually utilised in order to reach this target. These products have to guarantee an excellent adhesion of the sprayed material to the rock wall and a rapid compressive strength development. The first condition can be evaluated by measuring the capability of the accelerator to reduce the setting time of a cement paste. The second requirement is determined by measuring the mechanical strength development during the first hours of hydration of a cementitious mortar or concrete.

In the past, several alkaline accelerators were used, such as: soda, potash, silicate or alkali metal aluminates. Nevertheless, such accelerators are known to negatively affect the long term mechanical strengths. Moreover, due to their alkaline nature, they are irritating to the skin and particular protective devices are requested for the workers' safety. Furthermore, alkali metal substances reacting with aggregates, could favour alkali silica reaction (ASR) which impairing the concrete properties. Finally, they release alkaline substances that, by increasing the pH of ground waters, could be dangerous polluting agents.

These problems favoured the development "low in alkali" or "alkali-free" accelerators. According to European rules (Österreichischer Betonverein, Sprayed Concrete Guideline, Wien, March 1999 and pr EN 934-5 "Admixtures for Sprayed Concrete-Definitions, Requirements, Conformity, Marking and Labelling"), an accelerating admixture is classified as "alkali-free" when the concentration of sodium and potassium, expressed as equivalents of Na₂O, is lower than 1%. Lithium is also an alkali metal, however the scientific literature shows that it does not negatively affect the concrete and therefore it is not considered in the calculation of equivalents of Na₂O.

Among these "low in alkali" accelerators, a basic aluminium sulfate is known in the art (U.S. 5 660 625), which forms water suspensions with low stability.

New "alkali-free" admixtures consisting of fluoro aluminates and aluminium sulfate are also known in the art (EP 1167317 B1). These accelerators can be in the form of water solutions (with good long term stability) which cause a quick concrete setting, thereby allowing good adhesion to the rock walls. Nevertheless, they inhibit, in particular during the first hours of hydration, an effective mechanical strength development of the sprayed cementitious material.

Furthermore EP 1114004 B1 and EP 946451 B1 disclose accelerators based on aluminium carboxylates and aluminium sulfate. These accelerators are in the form of water solution and, compared to those based on fluoro aluminates, are characterised by a faster development of early mechanical strength with a lower capability to reduce the setting time and, therefore, they can negatively affect the adhesion of the fresh sprayed material on the rock walls, determining a large rebound.

### DESCRIPTION OF THE INVENTION

The object of the present invention is to provide accelerating admixtures for hydraulic binders capable to develop high mechanical strength while maintaining an efficient setting time reduction.

The reaction of aluminium sulfate based accelerators with hydrating cement produces ettringite, a highly hydrated sulfoaluminate crystalline phase containing several water molecules in its structural unit. During its formation, a considerable amount of mixing water is consumed, thus inducing a dramatic increase in the viscosity of the cement mixture, which results in a reduction of the setting time. Some scientists (H. Pollmann, R. Oberste-Padtberg, "Manganese in High Alumina Cement", Proceedings of Calcium Aluminate Cements 2001, Edinburgh, Scotland, Edited by R.J. Mangabhai and F.P. Glasser, pp. 139-148) reported that the addition of manganese to cementitious mixtures favours the formation of *shigaite,* a crystalline phase, different from ettringite, also containing many water crystallization molecules.

JP 2002-047048 discloses a hardening accelerator for rapid curing of cement/concrete which comprises Al, S, Na and F and optionally a carboxylic acid. WO 00/03958 A discloses a binding mixture for cement containing calcium sulphate and manganese sulphate. FR 939758 teaches the use of manganese sulphate as resistance catalyst in porous concrete.

This invention discloses new accelerators in form of water solution, which show better performances than those described in the "prior art", characterised by both a high capability to reduce setting time and an excellent mechanical strength development.

The "alkali-free" or "low in alkali" accelerating admixtures according to the invention comprise:
a) the reaction products of an alkali metal inorganic substance with a mixture of a carboxylic and/or a hydrohalogenic acid;
b) aluminium sulfate;
c) a manganese salt;
d) amorphous aluminium hydroxide;
   and optionally:
e) a lithium salt and/or an amino acid or an amino acid aluminium salt or a mixture of aluminium sulfate with an amino acid.

The alkali metal inorganic substance is, preferably sodium aluminate. The carboxylic-acid is preferably-formic-acid. The hydrohalogenic acid is preferably hydrofluoric acid. The manganese salt is preferably a manganese(II) salt, preferably carbonate, sulfate or nitrate.

Preferably, the alkali metal inorganic substance is reacted with a mixture of a carboxylic acid and a hydrohalogenic acid.

The amino acid is preferably glycine whereas the lithium salt is preferably lithium hydroxide or lithium cryolite.

The product performances are further improved by the addition of amines or alkanolamines, in particular diethanolamine.

The accelerator of the present invention can be in the form of a clear or turbid solution and after the evaporation of water the resulting powder maintains the same performances as the original solution.

The accelerators of the present invention are prepared, in the form of a water solution, by reacting a water solution of an alkali metal inorganic substance with a carboxylic acid or a hydrohalogenic acid or a mixture of carboxylic acid and a hydrohalogenic acid at a temperature of 60°C-70°C. Due to the hexothermic reaction, the temperature raises as a function of the aluminium/total quantity of acids ratio or of the starting water amount. A clear or slight turbid solution confirms the formation of soluble aluminium hydroxy-halogen-carboxylates. During the second step, keeping the temperature at approx. 60°C, aluminium sulfate or aluminium basic sulfate and manganese salts (preferably carbonate, sulfate, nitrate of manganese(II)) are added, stirring the mixture to obtain a clear solution. Afterwards, amorphous aluminium hydroxide is added and stirred till obtaining a clear or slightly turbid solution. At this point, an optional addition of lithium salts is possible. Any impurities can be filtered off. The accelerator efficiency may be further improved by addition of an amino acid or an amino acid aluminium salt or a mixture of aluminium sulfate with an amino acid and/or an alkanolamine or amine.

Alkali metal inorganic substances (preferably liquid sodium aluminate solutions) are present in a range of 0.5%-20% by weight on the overall ingredients. A lower range may be selected to obtain "alkali-free" accelerators.

Manganese salts are present in a range of 0.4%-20% and preferably of 0.4%-10% by weight on the overall ingredients.

Amino acids may be present in a range from 0 to 10% by weight on the overall ingredients.

The hydrohalogenic acid is preferably hydrofluoric acid.

The carboxylic acid can be a mono or dicarboxylic acid or hydroxy carboxylic (with 1 to 5 carbon atoms), such as formic, acetic, glycolic, lactic, succinic, fumaric, maleic or mixtures thereof, but formic acid is preferred.

The accelerator of the invention can be used at different dosages, preferably from 3 to 15% by weight of cement.

The characteristics and the advantages related to the use of the accelerator of the present invention are described in more details in the following examples.

All the components of the examples are expressed as per cent by weight.

### Example 1

An accelerator of the invention (Formula 1) was prepared according to the above mentioned procedure: 15 g of sodium aluminate as water solution (18% Al₂O₃; 20% Na₂O) were added to 165 g of water at 70°C in a glass vessel. 35 g of formic acid (85% water solution) and 10 g of hydrofluoric acid (40% water solution) were then added to the resulting mixture that was stirred for 15 minutes on water bath at 70°C, till a clear solution was obtained. Afterwards aluminium sulfate (Al₂(SO₄)₃14H₂O - 160 g) and manganese sulfate (MnSO₄ H₂O-20g) were added, stirring for 30 minutes; then amorphous aluminium hydroxide (52% Al₂O₃ 40 g) was added to the mixture, stirring for 1 hour. Afterwards 50 g of a glycine solution (consisting of 11% glycine, 30% aluminium sulfate and 59% water) and 5 g of diethanolamine (99% water solution) were added to the mixture, stirring to obtain a clear o slightly turbid pale yellow solution.

For comparison purposes, four more mixtures were prepared according to the above described procedure, but without manganese sulfate, sodium aluminate and glycine solution (comparative example 1), without hydrofluoric acid, sodium aluminate and glycine solution (comparative example 2), without hydrofluoric acid, manganese sulfate and glycine solution (comparative example 3), without hydrofluoric acid, manganese sulfate and sodium aluminate (comparative example 4). An admixture according to EP 946451 B1 (carboxyaluminate based) was also prepared.

Cement pastes were prepared by mixing a portland cement (Cement type I 42,5 R produced in Norway), water (water to cement ratio, W/C = 0.36) and 1% of polycarboxylate superplasticizer (Dynamon SX by Mapei). The accelerating admixture of the present invention (Formula 1 of Table 1, based on carboxylic acid, hydrofluoric acid, manganese sulfate, sodium aluminate, glycine) was added to the fresh cement pastes and the end setting time of the resulting mixture was measured according to Vicat's method. The results were compared with those from similar tests performed by using an "alkali-free" carboxylate based accelerator selected among those described in EP 946451 B1 not containing fluoride, manganese sulfate, sodium aluminate and glycine, and with other comparative formulations in which hydrofluoric acid, manganese sulfate, sodium aluminate and glycine are used separately (comparative Examples 1, 2, 3 and 4 of Table 1). All the compositions were used at the same dosage of 10% by cement weight. The results are shown in Table 1.

**Table 1. Composition of accelerating admixtures and end setting time of cement pastes prepared with the corresponding accelerator.**

| | **Formula according to** | **Formula 1 of the invention** | **Comparative Example 1** | **Comparative Example 2** | **Comparative Example 3** | **Comparative Example 4** |
|---|---|---|---|---|---|---|
| **End Setting time** | (EP 946451 **B1** | Water (33.0) | Water (50.0) | Water (48.0) | Water (49.0) | Water (42.0) |
| | | Manganese Sulfate (4.0) | / | Manganese Sulfate(4.0) | / | / |
| | | Amorphous Aluminum Hydroxide (52%Al₂O₃) (8_{.}0₎ | Amorphous Aluminum Hydroxide (52%Al₂O₃) (8.0) | Amorphous Aluminum Hydroxide (52%Al₂O₃) (8.0) | Amorphous Aluminum Hydroxide (52%Al₂O₃) (8.0) | Amorphous Aluminum Hydroxide (52%Al₂O₃) (8.0) |
| | | Hydrofluoric Acid 40% (2.0) | Hydrofluoric Acid 40% (2.0) | / | / | / |
| | | Formic acid | Formic acid | Formic acid | Formic acid | Formic acid |
| | | 85% (7.0) | 85% (7.0) | 85% (7.0) | 85% (7.0) | 85% (7.0) |
| | | Aluminum Sulfate (17%Al₂O₃) (32.0) | Aluminum Sulfate (17%Al₂O₃) (32.0) | Aluminum Sulfate (17%Al₂O₃) (32.0) | Aluminum Sulfate (17%Al₂O₃) (32.0) | Aluminum Sulfate (17%Al₂O₃) (32.0) |
| | | Dea 99% (1.0) | Dea 99% (1.0) | Dea 99% (1.0) | Dea 99% (1.0) | Dea 99% (1.0) |
| | | Sodium Aluminate (3.0) | / | / | Sodium Aluminate (3.0) | / |
| | | Glycine solution (10.0) | / | / | / | Glycine solution (10.0) |
| | 26' 5" | 5'50" | 25' 35" | 23' 15" | 1-6' 50" | 22' 00" |

The results of Table 1 show that cement mixtures added with the accelerating admixture of Formula 1, prepared combining hydrofluoric acid, manganese sulfate, sodium aluminate and glycine, are characterised by the lowest end setting time in comparison with cement pastes added with the admixtures claimed by EP 946451 B1 or with the accelerators containing separately hydrofluoric acid, manganese sulfate, sodium aluminate and glycine (comparative examples 1, 2, 3 and 4). These results clearly point out the synergistic effect on the setting time due to the simultaneous use of hydrofluoric acid, manganese sulfate, sodium aluminate and glycine.

### Example 2

An accelerator according to the invention was prepared as previously described in Example 1 following the composition reported in Tab. 2 (Formula 2). Three more admixtures were prepared according to the above described procedure but without manganese sulfate, sodium aluminate and glycine solution (comparative example 5), without formic acid, sodium aluminate and glycine solution (comparative example 6), without formic acid, manganese sulfate and glycine solution (comparative example 7), without formic acid, manganese sulfate and sodium aluminate (comparative example 8). An admixture according to EP 1167317 B1 was also prepared.

Cement pastes were prepared as in Example 1, by mixing a portland cement (Cement type I 42,5 R produced-in Norway), water (water to cement ratio, W/C = 0.36) and 1% of polycarboxylate superplasticizer (Dynamon SX by Mapei). An accelerating admixtures of the present invention (Formula 2 of Table 2) was added to the fresh cement pastes and the end setting time of the resulting mixture was measured according to Vicat's method. The results were compared with those of similar tests performed by using an ordinary "alkali-free" fluoroaluminate based accelerator not containing formic acid, manganese sulfate, sodium aluminate, glycine solution, and with other comparative formulations in which formic acid, manganese sulfate, sodium aluminate and glycine solution were used separately (comparative Examples 5, 6, 7 and 8 of Table 2). All the compositions were used at the same dosage of 7% by weight of cement. The results are shown in Table 2.

**Table 2. Composition of accelerating admixtures and end setting time of cement pastes prepared with the corresponding accelerator.**

| | | **Formula 2 of the invention** | **Comparative Example 5** | **Comparative Example 6** | **Comparative Example 7** | **Comparative Example 8** |
|---|---|---|---|---|---|---|
| **End Setting time** | **Formula according to (EP 1167317 B1)** | Water (30.0) | Water (47.0) | Water (45.0) | Water (46.0) | Water (39.0) |
| | | Manganese Sulfate (4.0) | / | Manganese Sulfate (4.0) | / | / |
| | | Amorphous Aluminum Hydroxide (52%Al₂O₃) (8.0) | Amorphous Aluminum Hydroxide (52%Al₂O₃) (8.0) | Amorphous Aluminum Hydroxide (52%Al₂O₃) (8.0) | Amorphous Aluminum Hydroxide (52%Al₂O₃) (8.0) | Amorphous Aluminum Hydroxide (52%Al₂O₃) (8.0) |
| | | Hydrofluoric Acid 40% (10.0) | Hydrofluoric Acid 40% (10.0) | Hydrofluoric Acid 40% (10.0) | Hydrofluoric Acid 40% (10.0) | Hydrofluoric Acid 40% (10.0) |
| | | Formic acid 85% (2.0) | Formic acid 85% (2.0) | / | / | / |
| | | Aluminum Sulfate (17%Al₂O₃) (32.0) | Aluminum Sulfate (17%Al₂O₃) (32.0) | Aluminum Sulfate (17%Al₂O₃) (32.0) | Aluminum Sulfate (17%Al₂O₃) (32.0) | Aluminum Sulfate (17%Al₂O₃) (32.0) |
| | | Dea 99% (1.0) | Dea 99% (1.0) | Dea 99% (1.0) | Dea 99% (1.0) | Dea 99% (1.0) |
| | | Sodium Aluminate (3.0) | / | / | Sodium Aluminate (3.0) | / |
| | | Glycine Solution (10.0) | / | / | / | Glycine Solution (10.0) |
| | 24' 40" | 2' 40" | 22' 5" | 12' 00" | 20' 5" | 16' 48" |

The results reported in Table 2 show that Formula 2, prepared combining formic acid, manganese sulfate, sodium aluminate and glycine solution, remarkably lower the end setting time of the cement mixtures compared to the ordinary fluoroaluminates based alkali-free admixtures. Furthermore these results clearly point out the synergistic effect on the setting time due to the simultaneous presence of formic acid, manganese sulfate, sodium aluminate and glycine.

### Example 3

An accelerator according to the invention was prepared as previously described in Example 1 following the composition reported in Table 3 (Formula 3). Three more commercial admixtures were used: Giulini F 2000 IN (by Giulini, carboxyaluminate based) and Mapequick AF 1000 (by Mapei, fluoroaluminate based).

Cement pastes were prepared as in Example 1, by mixing a portland cement, water (water/cement ratio of 0.315) and 1 % of polycarboxylate superplasticizer (Dynamon SX by Mapei). The accelerating admixtures were added to the fresh cement pastes and the setting times of the resulting mixtures were measured according to Vicat's method. Three different cements were used: a Cem. I 52,5 R produced in Italy; and two Cem. I 52,5 N (A and B) produced in France. Table 4 reports the dosages of each accelerator necessary to obtain an acceptable end setting time. These values are roughly connected to the amount of accelerator necessary to spray the concrete without problems.

In this example, the compressive strength development of cement mixtures- containing the accelerating admixtures of the present invention (Formula 3) or commercial accelerators was measured. The tests were carried out on mortar samples having the following composition:
450 g Cement;
1350 g Standardized sand;
0.4 g Antifoaming agent;
4.5 g Superplasticizer (Dynamon SX by Mapei);
202.5 Water;
31.5 g Accelerator.

The mortars were prepared according to EN 196/1. The accelerating admixture was added at the end of the mixing cycle and further mixed for 10". At early curing ages the mechanical strength was measured by a digital force gauge (Österreichischer Betonverein, Sprayed Concrete Guideline, Wien, March 1999) and it was expressed in N. At later curing ages, when the specimens. (40x40x160mm) become harder, the mechanical strength was measured according to the EN 196/1 and the values were expressed in MPa. The results are shown in Table 4.

**Table 3. Composition of the accelerating admixture based on the invention tested in comparison with commercial products.**

| **Formula 3 of the present invention** |
|---|
| Water |
| (20.5) |
| Manganese Sulfate |
| (4.0) |
| Amorphous Aluminium Hydroxide |
| (52%Al₂O₃) |
| (10.0) |
| Formic Acid 85% |
| (8.5) -- |
| Hydrofluoric Acid 40% (1.5) |
| Aluminium Sulfate (17%Al₂O₃) |
| (40.0) |
| Dea 99% |
| (6.0) |
| Sodium Aluminate |
| (4.5) |
| Glycine based solution |
| (5.0) |

**Table 4. Accelerator rates to obtain a setting time of cement paste between 1'30" and 2', and compressive strength of mortars admixed with accelerators.**

| Formula | Dosage to obtain an end setting time between 1'30"-2'00" | Compressive strength development (hours) | | | |
|---|---|---|---|---|---|
| | | 2h | 4h | 6h | 8h |
| Cem.I 52.5 R (produced in Italy) | | | | | |
| Formula 3 | 7% | 71 N | 240 N | 3.8 MPa | 6.9 NPa |
| Giulini F 2000 IN | 11% | 26 N | 56 N | 198 N | 1.6 SPA |
| Mapequick AF 1000 | 9% | 18 N | 27 N | 38 N | 53 N |

| Cem.I 52.5 N (A- produced in France) | | | | | |
|---|---|---|---|---|---|
| Formula 3 | 3% | 10 N | 22 N | 86 N | 1.9 MPa |
| Giulini F 2000 IN | 11% | 0 | 6 | 17 | 100 N |
| Mapequick AF 1000 | 8% | 3 N | 5N | 8 N | 13 N |

| Cem.I 52.5 N (B- produced in France) | | | | | |
|---|---|---|---|---|---|
| Formula 3 | 9% | 63 N | 129 N | 1.7 MPa | 2.7 MPa |
| Giulini F 2000 IN | 11% | 32 N | 66 N | 314 N | 1.2 MPa |
| Mapequick AF 1000 | 10% | 15 N | 26 N | 59 N | 94 N |

The results clearly indicate that the admixture of the present invention (Formula 3) can be used at lower dosage than the ordinary commercial products and that mortars added with the accelerator of the present invention have a compressive strength development significantly higher than ordinary commercial accelerators.

### Example 4

The accelerator efficacy was also evaluated by job site tests. The test was carried out at Hagerbach test gallery in Switzerland. A concrete with the following composition was used:
1) 400 kg/mc of Cem.I 52,5 N (type B produced in France);
2) 1% by cement weight of a polycarboxylate superplasticizer (Dynamon SX by Mapei);
3) 0.25% by cement weight of a retarder (Mapetard by Mapei);
4) 0-8 mm of carbonate based aggregate;
5) 0.52 of Water/Cement ratio.

A dosage of 7% by cement weight of three different accelerators was used: Formula 3 of example 3; Mapequick AF 1000 (fluoride based accelerator) and Giulini F 2000 IN (carboxylate based accelerator). Some physical mechanical concrete properties are herein reported:
Consistency (determined according to DIN 1048): 55 cm;
Density: 2375 kg/m³;
Air content: 1.8%;
24 hours compressive strength: 28.5 MPa.

The concrete was sprayed by a machine type Meyco Suprema at a spraying rate of 9 m³/h. The accelerators were initially compared evaluating the rebound and visual aspect of the sprayed concrete. At the selected dosage, the concrete sprayed with Formula 3 and Mapequick AF 1000 were characterised by a very low rebound. Furthermore, the adhesion on the rock wall was very good and no debonding was observed. On the contrary, the concrete sprayed with Giulini F 2000 IN showed a very high rebound and a large part of it fell down. Compressive strength development was measured according to the already mentioned Austrian rules on the concrete added with the best accelerators (Formula 3 of the present invention and Mapequick AF 1000). The results reported in figure showed that Formula 3 provides a better compressive strength development compared to Mapequick AF 1000, in particular after 30 minutes of curing.

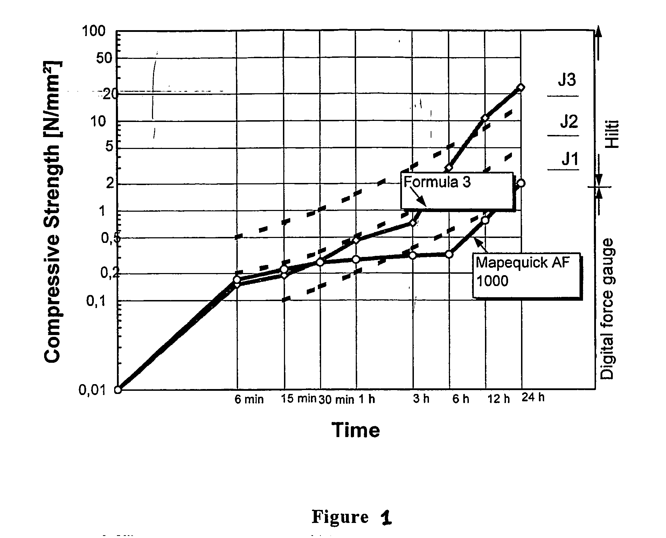

## Claims

1. An accelerating admixture for hydraulic cement comprising:
a) the reaction products of an alkali metal inorganic substance with a mixture of a carboxylic and a hydrohalogenic acid;
b) aluminium sulfate;
c) a manganese salt;
d) amorphous aluminium hydroxide;
and optionally:
e) a lithium salt;
and/or an amino acid or an amino acid aluminium salt or a mixture of aluminium sulfate with an amino acid.

2. An accelerating admixture according to claim 1 wherein the manganese salt is the divalent salt.

3. An accelerating admixture according to any one of claims 1 and 2 wherein the manganese salt is a carbonate or a sulfate in a range between 0.4-20% and preferably between 0.4-10%.

4. An accelerating admixture according to any one of claims 1 to 3 wherein the carboxylic acid can be a mono- or dicarboxylic acid or a hydroxy carboxylic acid with a number of carbon atoms ranging from 1 to 5 or a mixture thereof.

5. An accelerating admixture according to any one of claims 1 to 4 wherein the hydrohalogenic acid is hydrofluoric acid.

6. An accelerating admixture according to any one of claims 1 to 5 wherein the alkaline substance is sodium or potassium hydroxide and/or sodium or potassium aluminate.

7. An accelerating admixture according to any one of claims 1 to 6 wherein the lithium salt is lithium hydroxide or lithium cryolite.

8. An accelerating admixture according to any one of claims 1 to 7 containing from 0 to 10% of an amino-acid.

9. An accelerating admixture according to claim 8 wherein the amino acid is glycine.

10. An accelerating admixture according to any one of claims 1 to 9 stabilized with an amine or an alkanolamine.

11. An accelerating admixture according to claim 10 stabilized with diethanolamine.

## Patentansprüche

1. Eine Beschleunigerbelmischung für hydraulischen Zement, umfassend:
a) die Reaktionsprodukte einer anorganischen Alkalimetallsubstanz mit einer Mischung aus einer Carbon- und einer Halogenwasserstoffsäure;
b) Aluminiumsulfat;
c) ein Mangansalz;
d) amorphes Aluminiumhydroxid;
und gegebenenfalls
e) ein Lithiumsalz;
und/oder eine Aminosäure oder ein Aluminiumsalz einer Aminosäure oder eine Mischung aus Aluminiumsulfat mit einer Aminosäure.

2. Eine Beschleunigerbeimischung nach Anspruch 1, wobei das Mangansalz das zweiwertige Salz ist,

3. Eine Beschleunigerbeimischung nach einem der Ansprüche 1 und 2, wobei das Mangansalz ein Carbonat und ein Sulfat in einem Bereich von zwischen 0,4-20% und bevorzugt zwischen 0,4-10% ist.

4. Eine Beschleunigerbeimischung nach einem der Ansprüche 1 bis 3, wobei die Carbonsäure eine Mono- oder Dicarbonsäure oder Hydroxycarbonsäure mit einer Anzahl von Kohlenstoffatomen im Bereich von 1 bis 5 oder eine Mischung daraus sein kann.

5. Eine Beschleunigerbeimischung nach einem der Ansprüche 1 bis 4, wobei die Halogenwasserstoffsäure Fluorwasserstoffsäure ist,

6. Eine Beschleunigerbeimischung nach einem der Ansprüche 1 bis 5, wobei die alkalische Substanz Natrium- oder Kaliumhydroxid und/oder Natrium- oder Kaliumaluminat ist,

7. Eine Beschleunigerbeimischung nach einem der Ansprüche 1 bis 6, wobei das Lithiumsalz Lithiumhydroxid oder Lithiumkryolith ist,

8. Eine Beschleunigerbeimischung nach einem der Ansprüche bis 7, die 0 bis 10°/° einer Aminosäure enthält,

9. Eine Beschleunigerbeimischung nach Anspruch 8, wobei die Aminosäure Glycin ist,

10. Eine Beschleunigerbeimischung nach einem der Ansprüche 1 bis 9, die mit einen Amin oder einem Alkanolamin stabilisiert ist.

11. Eine Beschleunigerbeimischung nach Anspruch 10 die mit Diethanolamin stabilisiert ist.

## Revendications

1. Additif d'accélération pour un ciment hydraulique comprenant :
a) les produits de réaction d'une substance anorganique de métal alcalin avec un mélange d'acide carboxylique et hydrohalogénique ;
b) sulfate d'aluminium ;
c) sel de manganèse ;
d) hydroxyde d'aluminium amorphe ;
et éventuellement .
e) un sel de lithium ;
et/ou un acide aminé ou un sel d'aluminium d'acide aminé ou un mélange de sulfate d'aluminium avec un acide aminé.

2. Additif d'accélération selon la revendication 1 dans lequel le sel de manganèse est le sel divalent.

3. Additif d'accélération selon l'une quelconque des revendications 1 et 2, dans lequel le sel de manganèse est un carbonate ou un sulfate dans une gamme entre 0,4 et 20 % et préférentiellement entre 0,4 et 10 %.

4. Additif d'accélération selon l'une quelconque des revendications 1 à 3, dans lequel l'acide carboxylique peut être un acide mono ou di-carboxylique ou d'acide hydroxycarboxylique avec un nombre d'atomes de carbone dans une gamme entre 1 et 5 ou un mélangé de ceux-ci.

5. Additif d'accélération selon l'une quelconque des revendications 1 à 4, dans lequel l'acide hydrohalogénique est l'acide hydrofluorique.

6. Auditif d'accélération selon l'une quelconque des revendications 1 à 5, dans lequel la substance alcaline est l'hydroxyde de sodium ou de potassium et/ou de l'aluminate de potassium.

7. Additif d'accélération selon l'une quelconque des revendications 1 à 6, dans lequel le sel de lithium est 1' hydroxyde de lithium ou la cryolite de lithium.

8. Additif d'accélération selon l'une quelconque des revendications 1 à 7, comprenant entre 0 et 10 % d'un acide aminé.

9. additif d'accélération selon la revendication 8, dans lequel l'acide aminé est la glycine.

10. Additif d'accélération selon l'une quelconque des revendications 1 à 9 stabilisé avec une amine ou une alkanamine.

11. Additif d'accélération selon la revendication 10 stabilisé avec de la diethanolamine.
